# EUROPÄISCHE PATENTANMELDUNG

(11) **EP 0 870 957 A2**
(43) Veröffentlichungstag der Anmeldung: **14.10.1998**
(21) Anmeldenummer: 98810258.8
(22) Anmeldetag: 24.03.1998
(51) Int. Cl.: F16K 7/12

(54) **Membranventil**

(30) Priorität: 11.04.1997 DE 19715164
(71) Anmelder: Georg Fischer Rohrleitungssysteme GmbH, 78224 Singen (DE)
(72) Erfinder: Miklo, Jürgen, 8240 Thayngen (CH)
(74) Vertreter: Rottmann, Maximilian R.

(57) **Zusammenfassung**

Es wird ein Membranventil vorgeschlagen, mit einem, einen Medien-Durchflusskanal (54) aufweisenden Gehäuseunterteil (51), einem Gehäuseoberteil (52), in das eine Ventilspindel axial verschiebbar eingesetzt ist, und mit einer zwischen den Gehäuseteilen (51, 52) eingespannten Membrananordnung (53, 55). Zwischen der Membrananordnung (53, 55) und mindestens einem Gehäuseteil (51) sind Kompensationselemente (57, 58) angeordnet, um Änderungen der Dichtpressung zwischen Membrananordnung (53, 55) und Gehäuseteil (51, 52) auszugleichen, die als Folge von betriebsbedingten Beanspruchungen auftreten.

Mit dieser Anordnung wird erreicht, dass auch bei unterschiedlichen Betriebskräften und Temperaturunterschieden des durch das Ventil strömenden Mediums eine optimale Dichtpressung erhalten bleibt.

## Beschreibung

Die vorliegende Erfindung betrifft ein Membranventil mit einem, einen Medien-Durchflusskanal aufweisenden Gehäuseunterteil, einem Gehäuseoberteil, in das eine Ventilspindel axial verschiebbar eingesetzt ist, und mit einer zwischen den Gehäuseteilen eingespannten Membrananordnung.

Membranventile werden in sehr grossem Umfang technisch eingesetzt, soweit nicht hohe Drücke zu beherrschen sind, weil die Membran nicht nur als mit dem Ventilsitz zusammenwirkendes bewegliches Ventilglied dient, sondern auch gleichzeitig Abdichtfunktionen bei der Betätigung des beweglichen Ventilgliedes zum Antriebsgehäuse hin übernimmt. Die Membran vermag nur relativ geringe Hubbewegungen durchzuführen und muss relativ flexibel sein, damit sie die notwendige Verformung aufnehmen kann, ohne Schaden zu nehmen.

Beim Einsatz im Zusammenhang mit Kunststoffrohrleitungen ist man heute bestrebt, entsprechende Membranventile zu verwenden, deren Gehäuse aus Kunststoff besteht, so dass diese mit den Rohrleitungen einfach verschweissbar sind.

Wenn man bei einem derartigen bekannten Ventil die Gehäuseteile und dementsprechend auch die Stützmembrane aus Kunststoff herstellt, ergeben sich allerdings Probleme bei Ventilen, die von einem Medium durchflossen werden. Diese Probleme sind auf die im praktischen Einsatz auftretenden Kräfte, wie zum Beispiel Schraubenkräfte, Innendruck, Spindelkraft und Temperaturwechsel zurückzuführen. Die Folge dieser auftretenden Kräfte sind Verformungen, die zu einer Reduktion der Dichtpressung zwischen Membran und Gehäuseteil und damit zur Gefahr einer Leckage führen können.

Aufgabe der vorliegenden Erfindung ist es daher, ein Membranventil zu schaffen, das bei unterschiedlichen Betriebskräften und bei wechselnden Temperaturen des das Ventil durchströmenden Mediums stets dicht bleibt.

Diese Aufgabe wird dadurch gelöst, dass zwischen der Membrananordnung und mindestens einem Gehäuseteil Kompensationselemente angeordnet sind, um betriebsbedingte Änderungen der Dichtpressung zwischen Membrananordnung und Gehäuseteil auszugleichen.

Weitere bevorzugte Ausführungen ergeben sich aus den abhängigen Ansprüchen.

Durch den erfindungsgemässen Vorschlag werden Verformungen nicht mehr direkt auf die Membrananordnung weitergegeben, sondern von den Kompensationselementen aufgenommen.

Die Erfindung wird anhand der beiliegenden Zeichnungen näher erläutert.

Es zeigen:
Fig. 1 Einen Schnitt durch ein Membranventil gemäss dem Stand der Technik; und
Fig. 2-10 schematische Teilschnitte durch verschiedene Ausführungsvarianten gemäss der vorliegenden Erfindung.

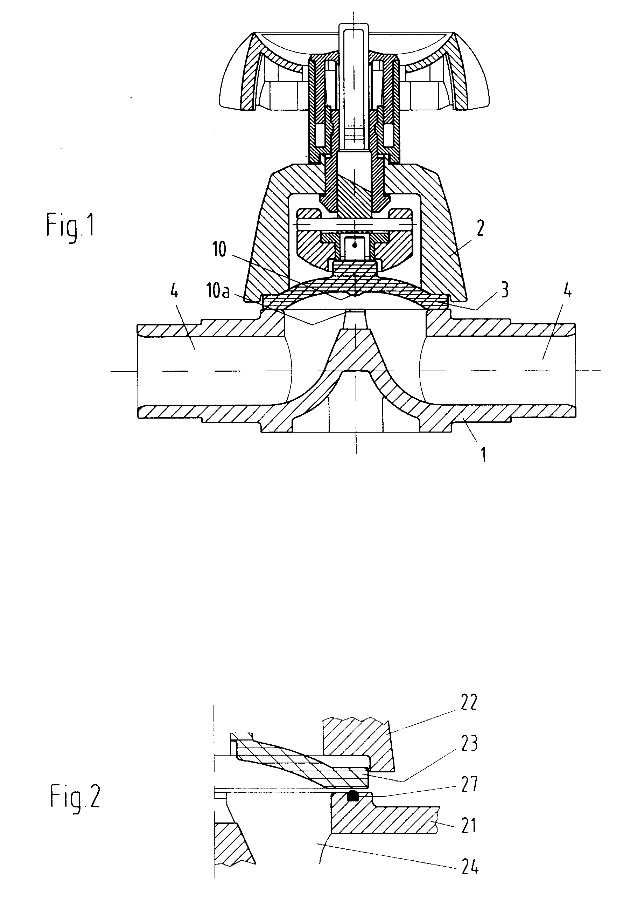

Das Membranventil weist ein Gehäuseunterteil 1 mit einem Medium-Durchflusskanal 4 und einem Gehäuseoberteil 2 auf. Beide Gehäuseteile 1 und 2 bestehen aus einem Kunststoff, wobei das Gehäuseunterteil 1 je nach Art des Durchflussmediums beispielsweise aus Polypropylen oder einem ähnlichen Kunststoff gefertigt werden kann. Zwischen dem Gehäuseunterteil 1 und dem Gehäuseoberteil 2 befindet sich eine randseitig eingespannte, vorgeformte, elastische Membrane 3. In der Fig. 1 ist das Ventil in der Offenstellung gezeigt, d. h. in einer Stellung, bei der ein Fördermedium durch den Kanal 4 strömen kann. In der Schliessstellung liegt die Membrane 3 mit einem Vorsprung 10 an einem Dichtsteg 10a des Gehäuseunterteils 1 dichtend an und unterbricht dadurch den Strömungsfluss des Mediums.

Die Membrane 3 ist während der Einsatzzeit eines Membranventils vielfältigen Betriebsbeanspruchungen ausgesetzt. Die auf Grund des betrieblichen Einsatzes auftretenden Kräfte sind insbesondere Schraubenkräfte, variable Innendrucke, Spindelkraft und Temperaturwechsel. Diese Kräfte führen zu Verformungen sowohl im Gehäuseoberteil 2 als auch im Unterteil 1 der Armatur, was durch Reduktion der Dichtpressung zwischen Membrane 3 und Unter- und/oder Oberteil 1, 2 führen kann mit der Folge einer Leckage.

Beim Ausführungsbeispiel eines erfindungsgemässen Membranventils nach Fig.2 ist im unteren Gehäuseteil 21 der Armatur ein Kompensationselement gemäss der Erfindung in Form eines O-Ringes 27 vorgesehen. Dieser O-Ring 27 ist ein Elastomerdichtring und weist ein ähnliches Ausdehnungsverhalten wie das Wärmeausdehnungsverhalten der Gehäuseteile 21 und 22 auf, so dass die Membrane 23 entsprechend entlastet, und damit das Ventil im Bereich der Membrane 23 nicht undicht wird.

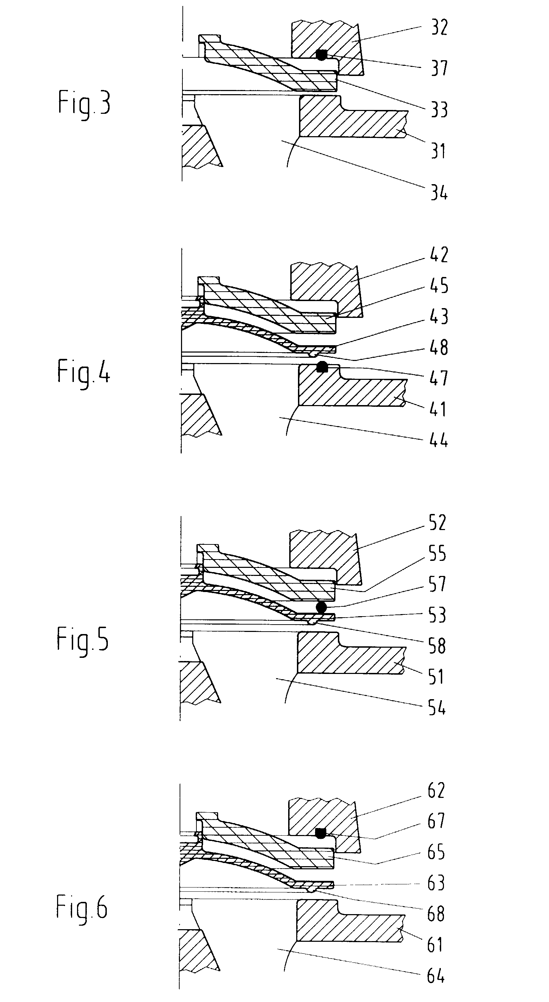

Die Fig.3 zeigt eine weitere Ausführungsform, bei der ein O-Ring 37, der als Kompensationselement dient, im oberen Gehäuseteil 32 angeordnet ist und mit der steuermediumseitigen Oberfläche der Membrane 33 zusammenwirkt.

Die Ausführungsform gemäss Fig.4 stellt eine zweiteilige Membrananordnung dar, bestehend aus einer Stützmembrane 45 und einer Dichtmembrane 43. Ein Kompensationselement in Form eines O-Rings 47 ist im unteren Gehäuseteil 41 angeordnet. Zusätzlich zu diesem Kompensations-O-Ring 47 ist noch ein weiteres Kompensationselement in Form eines an der Dichtmembrane 43 angeformten ringförmigen Vorsprunges 48 vorgesehen.

Fig.5 zeigt als weitere Variante der Anordnung von Kompensationselementen einen O-Ring 57, der zwischen den zwei Membranteilen, nämlich zwischen Stützmembran 55 und Dichtmembran 53, angeordnet ist. Zusätzlich ist wiederum ein an der Dichtmembran 53 angeformtes Kompensationselement in der Form eines ringförmigen Vorsprunges 58 vorgesehen, der mit dem unteren Gehäuseteil 51 zusammenzuwirken bestimmt ist.

Fig.6 zeigt als weitere Variante der Anordnung von Kompensationselemente einen O-Ring 67, der am Gehäuseoberteil 62 angeordnet und mit der Stützmembran 65 zusammenzuarbeiten bestimmt ist. Zusätzlich ist wiederum ein an der Dichtmembran 63 angeformtes Kompensationselement in der Form eines ringförmigen Vorsprunges 68 vorgesehen, der mit dem unteren Gehäuseteil 61 zusammenzuwirken bestimmt ist.

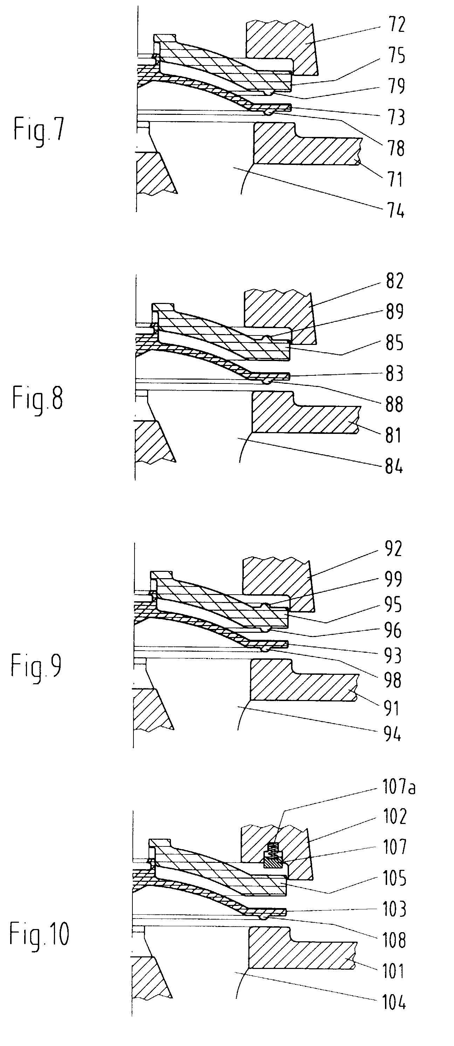

Die Ausführungsform gemäss Fig.7 stellt wiederum eine zweiteilige Membrananordnung dar, bestehend aus einer Stützmembrane 75 und einer Dichtmembrane 73. Ein erstes Kompensationselement ist in Form eines an der Stützmembrane 75 angeformten ringförmigen Vorsprunges 79 vorgesehen, der nach unten vorsteht und mit der Dichtmembrane 73 zusammenzuwirken bestimmt ist. Zusätzlich zu diesem Kompensations-Vorsprung 79 ist noch ein weiteres Kompensationselement in Form eines an der Dichtmembrane 73 angeformten ringförmigen Vorsprunges 78 vorgesehen, der mit dem unteren Gehäuseteil 71 zusammenzuwirken bestimmt ist.

Das Ausführungsbeispiel gemäss Fig. 8 zeigt eine Variante, bei der die Stützmembrane 85 mit einem Kompensationselement in Form eines angeformten, gegen oben abstehenden ringförmigen Vorsprungs 89 und die Dichtmembrane 83 mit einem Kompensationselement in Form eines angeformten, gegen unten abstehenden ringförmigen Vorsprungs 88 versehen sind. Der Vorsprung 89 ist zum Zusammenwirken mit dem Gehäuseoberteil 82 und der Vorsprung 88 zum Zusammenwirken mit dem Gehäuseunterteil 81 bestimmt.

Das Ausführungsbeispiel gemäss Fig. 9 zeigt eine Variante, bei der die Stützmembrane 95 mit zwei Kompensationselementen in Form eines angeformten, gegen oben abstehenden ringförmigen Vorsprungs 99 sowie eines angeformten, gegen unten abstehenden ringförmigen Vorsprungs 96 versehen ist. Zusätzlich ist die Dichtmembrane 93 mit einem Kompensationselement in Form eines angeformten, gegen unten abstehenden ringförmigen Vorsprungs 98 versehen. Der Vorsprung 99 ist zum Zusammenwirken mit dem Gehäuseoberteil 92, der Vorsprung 96 zum Zusammenwirken mit der Dichtmembrane 93 und der Vorsprung 98 zum Zusammenwirken mit dem Gehäuseunterteil 91 bestimmt.

Die Figur 10 schliesslich zeigt eine besondere Ausführung, bei der im oberen Gehäuseteil 102 eine im Gehäuse angeordnete Spiralfeder 104 erkennbar ist. Die Spiralfeder 104 ist vorgespannt und stützt sich gegen einen beweglichen Ring 107 ab. Diese Anordnung kompensiert beispielsweise das Wärmeausdehnungsverhalten der Gehäuseteile 102 und 101. Gleichzeitig ist ein weiteres Kompensationselement in Form eines an der Dichtmembrane 103 angeformten ringförmigen Vorsprunges 108 vorgesehen, der mit dem Unterteil 101 des Gehäuse zusammenwirkt, so dass bei den betrieblichen Wechselbelastungen des Membranventils der Membranrandbereich nicht undicht wird.

## Patentansprüche

1. Membranventil mit einem, einen Medien-Durchflusskanal (24; 34; 44; 54; 64; 74; 84; 94; 104) aufweisenden Gehäuseunterteil (21; 31; 41; 51; 61; 71; 81; 91; 101), einem Gehäuseoberteil (22; 32; 42; 52; 62; 72; 82; 92; 102), in das eine Ventilspindel axial verschiebbar eingesetzt ist, und mit einer zwischen den Gehäuseteilen eingespannten Membrananordnung (23; 33; 43,45; 53,55; 63;65; 73,75; 83,85; 93,95; 103,105), dadurch gekennzeichnet, dass zwischen der Membrananordnung (23; 33; 43,45; 53,55; 63;65; 73,75; 83,85; 93,95; 103,105) und mindestens einem Gehäuseteil Kompensationselemente (27; 37; 47,48; 57,58; 67,68; 78,79; 88,89; 96,98,99; 107,107a,108) angeordnet sind, um Änderungen der Dichtpressung zwischen Membrananordnung (23; 33; 43,45; 53,55; 63;65; 73,75; 83,85; 93,95; 103,105) und Gehäuseteil auszugleichen, die als Folge von betriebsbedingten Beanspruchungen auftreten.

2. Membranventil nach Anspruch 1, dadurch gekennzeichnet, dass das Kompensationselement gleichzeitig ein Dichtelement ist und als ein Elastomerdichtring (27; 37; 47; 57; 67) mit beliebigem Querschnitt ausgebildet ist.

3. Membranventil nach Anspruch 1, dadurch gekennzeichnet, dass das Kompensationselement im Gehäuseteil eingespritzt ist

4. Membranventil nach Anspruch 2, dadurch gekennzeichnet, dass der Elastomerdichtring zwischen dem Gehäuseoberteil (32) und der Membrane (33) in Form eines O-Ringes (37) angeordnet ist.

5. Membranventil, nach Anspruch 2, dadurch gekennzeichnet, dass der Elastomerdichtring zwischen dem Gehäuseunterteil (41) und der Membrane (43) in Form eines O-Ringes (47) vorgesehen ist.

6. Membranventil, nach Anspruch 1, dadurch gekennzeichent, dass die Membrananordnung aus einer Stützmembrane (45; 55; 65; 75; 85; 95; 105) und einer Dichtmembrane (43; 53; 63; 73; 83; 93; 103)besteht, und dass die Kompensationselemente (27; 37; 47,48; 57,58; 67,68; 78,79; 88,89; 96,98,99; 107,107a,108) je zwischen Gehäuseoberteil und Stützmembran, zwischen Stützmembran und Dichtmembran und/oder zwischen Dichtmembran und Gehäuseunterteil, einzeln oder in Kombination angeordnet sind.

7. Membranventil nach Anspruch 1, dadurch gekennzeichnet, dass als Kompensationselemente mehrere über den Umfang des Gehäuseunter- oder Oberteiles (102) verteilt angeordnete vorgespannte Spiralfedern (107a) vorgesehen sind.

8. Membranventil nach einem der Ansprüche 1 bis 7, dadurch gekennzeichnet, dass die Kompensationselemente (27; 37; 47,48; 57,58; 67,68; 78,79; 88,89; 96,98,99; 107,107a,108) untereinander kombinierbar sind.
